# EUROPEAN PATENT APPLICATION

(11) **EP 4 787 399 A1**
(43) Date of publication of application: **05.08.2026**
(21) Application number: 24872524.4
(22) Date of filing: 27.09.2024
(51) Int. Cl.: H01B 3/00, H01B 7/02, H01M 50/503, H01M 50/505, H01M 50/522, H01M 50/524, H01M 50/526

(54) **COMPOSITE MEMBER**

(30) Priority: 29.09.2023 JP 2023170682
(71) Applicant: IBIDEN CO., LTD., Ogaki-shi, Gifu 503-8604 (JP)
(72) Inventor: GOTO, Shinnosuke, Ibi-gun, Gifu 501-0695 (JP); USHIDA, Takeshi, Ibi-gun, Gifu 501-0695 (JP)
(74) Representative: Hoffmann Eitle
(86) International application number: PCT/JP2024/034700
(87) International publication number: WO 2025/070743

(57) **Abstract**

To provide a composite member that has an excellent insulating property and heat resistance, that does not require a winding operation such as that for a ceramic tape, that has no problems with winding unevenness, a gap, or peeling off, and that can easily cope with even a conductive substrate having a complicated shape. A composite member (1) includes a substrate (2) and an insulating film (3) that covers at least a part of a surface of the substrate (2) and that has a thickness of 150 µm or more. The insulating film (3) contains a matrix (10) containing a compound having a siloxane bond and an inorganic material (20) dispersed in the matrix (10), and in the case where a cross section of the composite member (1) parallel to a thickness direction thereof is observed, a ratio (P1/P2) of a porosity P1 in a region R1 in a range from an interface with the substrate (2) to 100 µm to a porosity P2 in a region R2 in a range from a surface of the insulating film (3) to 100 µm is 0.3 or more and 3.0 or less. The regions R1 and R2 each indicate a region with 75 µm in the thickness direction and with 300 µm in a direction orthogonal to the thickness.

## Description

### TECHNICAL FIELD

The present invention relates to a composite member in which a substrate is covered with an insulating film.

### BACKGROUND ART

In order to electrically connect components, a conductive member in which an insulating film is formed on a surface of a metal piece is used. For example, various electronic devices, electric vehicles or hybrid vehicles driven by an electric motor, storage batteries, and the like are mounted with a power storage device in which a plurality of battery cells are connected in series or in parallel by a bus bar, which is a conductive member. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulating property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, an operation of winding the ceramic tape around the bus bar body is required. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, no sufficient insulating property and heat resistance can be obtained. It is also assumed that an adhesive surface of the ceramic tape is peeled off. Further, although a nylon tape is wound as an insulating layer on an outer side of the mica tape, the nylon tape is weak against heat and has a problem in heat resistance.

Therefore, an object of the present invention is to provide a composite member that has an excellent insulating property and heat resistance, that does not require a winding operation such as that for a ceramic tape, that has no problems with winding unevenness, a gap, or peeling off, that can easily cope with a complicated shape, that is in close contact with a substrate without peeling off of an insulating film even in the case of being heated at a high temperature, and that can maintain an excellent insulating property and heat resistance.

### SOLUTION TO PROBLEM

The above object of the present invention is achieved by the following configuration [1] relating to a composite member.
[1] A composite member comprising:
   a substrate; and
   an insulating film covering at least a part of a surface of the substrate, wherein
   the insulating film has a thickness of 150 µm or more,
   the insulating film contains a matrix containing a compound having a siloxane bond and an inorganic material dispersed in the matrix, and
   in a case where a cross section of the composite member parallel to a thickness direction of the insulating film is observed, a ratio (P1/P2) of a porosity P1 in a rectangular region R1 to a porosity P2 in a rectangular region R2 is 0.3 or more and 3.0 or less, the rectangular region R1 having a side of 75 µm in the thickness direction and a side of 300 µm in a direction orthogonal to the thickness direction in a range from an interface between the insulating film and the substrate to 100 µm in the thickness direction, and the rectangular region R2 having a side of 75 µm in the thickness direction and a side of 300 µm in the direction orthogonal to the thickness direction in a range from a surface of the insulating film to 100 µm in the thickness direction.
   In addition, preferred embodiments of the present invention relating to the composite member relate to the following [2] to [14].
[2] The composite member according to [1], wherein
   in the case where the cross section of the composite member parallel to the thickness direction of the insulating film is observed, a porosity P3 in a rectangular region R3 is 10% or less, the rectangular region R3 having a side in a direction parallel to the thickness direction being a length of 90% of the thickness of the insulating film and a side of 300 µm in the direction orthogonal to the thickness direction.
[3] The composite member according to [1] or [2], in which both the porosity P1 and the porosity P2 are 10% or less.
[4] The composite member according to any one of [1] to [3], in which a surface layer consisting of a material of the matrix is provided on at least a part of the surface of the insulating film.
[5] The composite member according to [4], in which the surface layer has a thickness of 10 µm or more and 100 µm or less.
[6] The composite member according to any one of [1] to [5], in which a resin layer containing a resin different from the material of the matrix is provided on at least a part of the surface of the insulating film.
[7] The composite member according to [6], in which the resin layer has a thickness of 100 µm or more and 600 µm or less.
[8] The composite member according to any one of [1] to [7], in which the compound having the siloxane bond is at least one of silicone and silica sol.
[9] The composite member according to any one of [1] to [8], in which the inorganic material includes at least one kind selected from silica, alumina, mullite, and zirconia.
[10] The composite member according to any one of [1] to [8], in which the inorganic material includes at least one kind selected from a glass-based material, mica, kaolin, talc, clay, pyrophyllite, montmorillonite, bentonite, wollastonite, xonotlite, zeolite, diatomaceous earth, and halloysite.
[11] The composite member according to any one of [1] to [10], in which the inorganic material includes at least one kind selected from a flaky inorganic material, a fibrous inorganic material, and a particulate inorganic material.
[12] The composite member according to any one of [1] to [8], in which the inorganic material includes at least one of a flaky glass-based material and mica.
[13] The composite member according to any one of [1] to [12], in which the composite member is applied to a bus bar that connects a plurality of battery cells or battery modules.
[14] The composite member according to any one of [1] to [12], in which the composite member is applied to a connector, a protective component for a battery module, a case of an electronic component, a battery cell, a battery module, a battery pack, or a coil of a motor.

### ADVANTAGEOUS EFFECTS OF INVENTION

In the composite member according to the present invention, since the insulating film covering at least a part of the substrate contains the compound having the siloxane bond and the inorganic material, excellent heat resistance and insulating property can be obtained. In addition, since the insulating film has a predetermined thickness or more and the ratio of a density of pores in a region close to the substrate to a density of pores in a region close to an outer surface in the thickness direction is defined within a predetermined range, it is possible to obtain an excellent strength and to further improve the heat resistance and the insulating property.

### BRIEF DESCRIPTION OF DRAWINGS

[Fig. 1] Fig. 1 is a photograph substituted for a drawing showing a cross section of a composite member according to the present embodiment.
[Fig. 2] Fig. 2 is a perspective view showing a bus bar to which the composite member according to the present embodiment is applied.
[Fig. 3A] Fig. 3A is a diagram showing a method for producing a composite member according to the present embodiment in order of steps, and is a schematic diagram showing a state after a first coating material curing step for the first time.
[Fig. 3B] Fig. 3B is a diagram showing the method for producing a composite member according to the present embodiment in order of steps, and is a schematic diagram showing a state after an immersion step for the first time.
[Fig. 3C] Fig. 3C is a diagram showing the method for producing a composite member according to the present embodiment in order of steps, and is a schematic diagram showing a state after a first coating material curing step for the second time.
[Fig. 3D] Fig. 3D is a diagram showing the method for producing a composite member according to the present embodiment in order of steps, and is a schematic diagram showing a state after a resin layer forming step.

### DESCRIPTION OF EMBODIMENTS

The present inventors have conducted intensive studies to obtain a composite member capable of solving the above problems without using an insulating tape such as a ceramic tape. As a result, the present inventors have found that it is possible to easily cope with a complicated shape by covering a surface of a substrate with a material of an insulating film and forming the insulating film covering the surface of the substrate. However, simply covering the surface of the substrate with the material of the insulating film and curing the material to form the insulating film may cause a large number of pores to be generated inside the insulating film, and a strength of the insulating film decreases. In addition, when a thickness of the insulating film is formed to be large in order to sufficiently ensure the strength and the insulating property, a density of the pores may be uneven in a thickness direction of the film, and the strength may further decrease.

Therefore, the present inventors have found that the above problems can be effectively solved by forming an insulating film having a predetermined thickness or more and having a ratio of a density of pores in a region close to a substrate to a density of pores in a region close to an outer surface in the thickness direction within a predetermined range. That is, a composite member including the insulating film has high adhesion between the insulating film and the substrate, and can have an excellent insulating property and heat resistance.

Hereinafter, embodiments of the present invention will be described in detail with reference to the drawings. Note that, the present invention is not limited to the embodiments described below, and can be freely changed and implemented without departing from the gist of the present invention.

### [Composite Member]

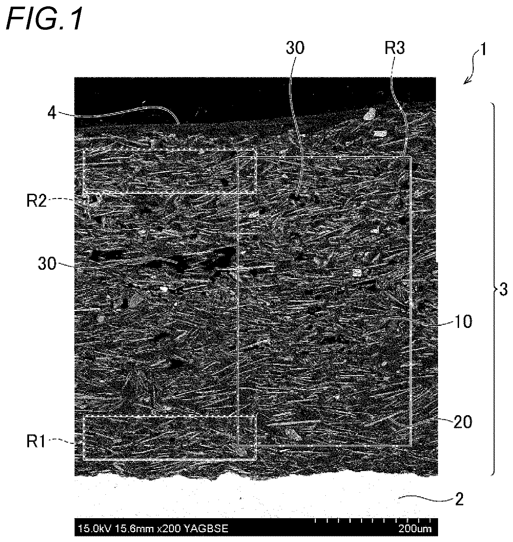

Fig. 1 is a photograph substituted for a drawing showing a cross section of a composite member according to the present embodiment. A composite member 1 includes a substrate 2 and an insulating film 3 covering at least a part of a surface of the substrate 2. In addition, as shown in Fig. 1, the composite member 1 may include a surface layer 4 consisting of a material of a matrix 10 to be described later on at least a part of a surface of the insulating film 3. The insulating film 3, the surface layer 4, the substrate 2, and the like of the composite member 1 according to the present embodiment will be described in detail below.

### <Insulating Film>

The insulating film 3 contains the matrix 10 containing a compound having a siloxane bond and an inorganic material 20 dispersed in the matrix 10. Since both the compound having the siloxane bond and the inorganic material 20 are materials having excellent heat resistance and insulating property, when the compound having the siloxane bond and the inorganic material 20 are contained as the components of the insulating film 3, an insulating film having excellent heat resistance and insulating property can be obtained. In addition, a plurality of pores 30 are formed inside the insulating film 3.

Note that, examples of the compound having the siloxane bond (Si-O-Si bond) include silicone and silica sol (silica: SiO₂). From the viewpoint of excellent heat resistance and insulating property, the compound having the siloxane bond contained in the matrix 10 is preferably at least one of silicone and silica sol, and more preferably silicone. It is also preferable that the matrix 10 contains both silicone and silica sol.

In the present embodiment, a thickness of the insulating film 3 and a porosity in the case where a cross section of the composite member 1 in a direction parallel to the thickness of the insulating film 3 is observed are defined as follows.

### (Thickness of Insulating Film)

When the thickness of the insulating film 3 is less than 150 µm, the strength of the insulating film 3 is insufficient, peeling off may occur, and it is difficult to ensure the insulating property. Therefore, the thickness of the insulating film 3 is 150 µm or more, and preferably 200 µm or more. On the other hand, as the thickness of the insulating film 3 having a porosity to be described later increases, the strength of the insulating film 3 is improved, and thus the upper limit of the thickness is not particularly limited, but when the thickness is excessively increased, it is difficult to control a size of the composite member 1, and a production cost also increases. In addition, peeling off easily occurs. Therefore, the thickness of the insulating film 3 is preferably 800 µm or less, and more preferably 600 µm or less.

### (Porosity of Insulating Film)

When it is attempted to simply form an insulating film having a large thickness for the purpose of improving the strength of the insulating film, a large number of pores are generated inside depending on the production method, and a variation in porosity is generated. As a result, the strength of the insulating film remarkably decreases. In the present embodiment, the strength of the insulating film 3 is ensured by reducing the variation in porosity in a thickness direction of the insulating film 3. More specifically, in the case where the cross section of the composite member 1 parallel to the film thickness direction of the insulating film 3 is observed, a ratio (P1/P2) of a porosity P1 in a predetermined region R1 to a porosity P2 in a predetermined region R2 is defined.

Note that, the region R1 is a region collected from a range from an interface between the insulating film 3 and the substrate 2 to 100 µm in the film thickness direction, and represents a rectangular region having a side of 75 µm in the film thickness direction and a side of 300 µm in a direction orthogonal to the film thickness direction. In addition, the region R2 is a region collected from a range from the surface of the insulating film 3 to 100 µm in the film thickness direction, and represents a rectangular region having a side of 75 µm in the film thickness direction and a side of 300 µm in a direction orthogonal to the film thickness direction. In addition, the porosities P1 and P2 are preferably obtained by collecting the regions R1 and R2 from three points within the above ranges and calculating an average of the porosities of the regions R1 and R2, and more preferably obtained by calculating an average of the porosities from five points within the above ranges.

When the ratio (P1/P2) of the porosity P1 in the region R1 to the porosity P2 in the region R2 is 0.3 or more and 3.0 or less, the variation in porosity in the thickness direction of the insulating film 3 is small, and an excellent strength can be obtained. Therefore, the ratio (P1/P2) of the porosity P1 to the porosity P2 is 0.3 or more, preferably 0.35 or more, and more preferably 0.4 or more.

As described above, in the present embodiment, the strength of the insulating film 3 is ensured by reducing the variation in porosity in the thickness direction of the insulating film 3. However, when the porosity is smaller than that of the surface of the insulating film 3 and the density of the insulating film 3 is higher near the substrate 2, the insulating film 3 can be further prevented from being peeled off from the substrate 2, and a high strength insulating film can be obtained. Therefore, the ratio (P1/P2) of the porosity P1 to the porosity P2 may be 3.0 or less, and is preferably 2.0 or less, more preferably 1.5 or less, still more preferably 1.0 or less, and particularly preferably 0.9 or less in order to further prevent the peeling off. Note that, in the composite member 1 according to the present embodiment shown in Fig. 1, the ratio (P1/P2) of the porosity P1 to the porosity P2 is 0.46.

In addition, in the present embodiment, it is also preferable to define a porosity P3 in a region R3 from the interface with the substrate 2 to the surface of the insulating film 3 in the case where the cross section of the composite member 1 in the direction parallel to the thickness of the insulating film 3 is observed. When the porosity P3 is 10% or less, the number of pores is reduced as a whole, a space between the inorganic materials 20 in the insulating film 3 is almost filled with the matrix 10, and the entire insulating film 3 is dense, so that the strength of the insulating film 3 can be sufficiently obtained. Therefore, the porosity P3 is preferably 10% or less, more preferably 8% or less, and still more preferably 6% or less.

Note that, the region R3 represents a rectangular region having a length of a side in the film thickness direction being a length of 90% of the thickness of the insulating film 3 and a side of 300 µm in the direction orthogonal to the film thickness direction. In addition, the porosity P3 is preferably obtained by collecting the region R3 from three points within the above range and calculating an average of the porosities, and more preferably obtained by calculating an average of the porosities from five points within the above range.

Further, in the present embodiment, the porosity P1 and the porosity P2 are also preferably equal to or less than a predetermined value. Both the porosity P1 and the porosity P2 being 10% or less means that a large amount of pores 30 are not generated only in the surface of the insulating film 3 or only near the interface with the substrate 2, and since a variation in pores 30 is small, a more excellent strength can be obtained. Therefore, both the porosity P1 and the porosity P2 are preferably 10% or less, more preferably 8% or less, and still more preferably 6% or less.

In the present embodiment, the porosities P1 to P3 are calculated according to the following method. First, in the composite member 1 on which the insulating film 3 is formed, a micrograph of a cross section in the direction parallel to the thickness direction is taken. Next, the pores 30 present in the regions R1 to R3 are extracted from the obtained photograph, and a total area of the pores 30 in each region is calculated. Thereafter, the porosities P1 to P3 in the regions R1 to R3 can be calculated by dividing the corresponding total area of the pores 30 by the area of the corresponding region.

In the composite member 1 configured as described above, the insulating property is not imparted by winding a tape around the substrate 2, but the surface of the substrate 2 is covered with the material of the insulating film to form the insulating film 3 in close contact with the substrate 2. Therefore, during the production of the composite member 1 according to the present embodiment, a winding operation is not required, there is no problems with winding unevenness, a gap, or peeling off, and it is possible to easily cope with even a complicated shape. In addition, since the insulating film 3 contains the inorganic material 20 and the matrix 10 containing a compound having a siloxane bond (Si-O-Si bond) such as silicone or silica sol (silica: SiO₂), even in the case where the composite member 1 is exposed to a high temperature, deterioration is less likely to occur, and excellent heat resistance and insulating property can be maintained. Further, since the thickness and the porosity of the insulating film 3 are defined as described above, an excellent strength can be obtained, and as a result, more excellent heat resistance and insulating property can be obtained.

Hereinafter, the material constituting the insulating film in the composite member 1 according to the present embodiment will be described in more detail.

### (Compound Having Siloxane Bond: Silicone)

Silicone, which is a preferred example of the compound having the siloxane bond contained in the matrix 10 of the insulating film 3, is heated in a coating material curing step in a production method to be described later, whereby functional groups disappear and a SiO bond is generated. In addition, when a flame or the like is generated near the composite member and the insulating film is heated to a temperature of, for example, 700°C or higher, SiO₂ is generated by thermal decomposition. Then, since SiO₂ is not burned out even when subjected to a flame, the insulating film 3 containing silicone can have excellent heat resistance. That is, even in the case where the composite member 1 according to the present embodiment is heated at a high temperature, the insulating film 3 is in close contact with the substrate 2 without peeling off, and an excellent insulating property and heat resistance can be maintained. Note that, the silicone may be either a silicone resin or a silicone rubber, and it is preferable to use a silicone resin from the viewpoint of increasing a density of SiO₂ to be formed.

### (Inorganic Material)

Since the inorganic material 20 has a high melting point and excellent heat resistance, the heat resistance of the insulating film 3 can be further improved by containing the inorganic material 20 in the insulating film 3. In addition, since the inorganic material 20 can also act as a framework in the insulating film 3, the strength of the insulating film 3 can be improved.

The inorganic material 20 preferably contains a silicate compound. As described above, silicone, which is an example of the compound having the siloxane bond, can be changed into SiO₂ by thermal decomposition, but since the silicate compound has the same component as SiO₂ formed by silicone, a bonding force between the matrix 10 containing silicone and the inorganic material 20 can be improved. Note that, the silicate compound preferably includes at least one kind selected from a glass-based material, mica, kaolin, talc, clay, pyrophyllite, montmorillonite, bentonite, wollastonite, xonotlite, zeolite, diatomaceous earth, and halloysite.

Note that, since a main component of silica sol (silica), which is another preferred example of the compound having the siloxane bond, is SiO₂ and the silicate compound has the same component as the silica sol (SiO₂), the bonding force between the matrix 10 containing the silica sol (silica) and the inorganic material 20 can also be improved.

In addition, the inorganic material 20 also preferably includes at least one kind selected from silica, alumina, mullite, and zirconia. Since the above material has a high melting point and a high insulating property, the heat resistance and the insulating property of the insulating film 3 can be further improved by containing these materials in the insulating film 3. Note that, in the case of applying a bus bar as an example of the composite member according to the present invention, a heat exposure temperature assumed for the bus bar is equal to or higher than a melting point of a metal material used for a general bus bar body. In the present embodiment, when silica, alumina, mullite, zirconia, or the like is contained as the inorganic material 20, since these materials have a melting point equal to or higher than the thermal exposure temperature, it is possible to suppress the bus bar body from being exposed to high heat. Therefore, the above materials are suitably used as the material of the insulating film 3 in the bus bar.

The inorganic material 20 preferably has at least one shape selected from a flaky shape, a fibrous shape, and a particulate shape. When the inorganic material 20 has the shape as described above, an adhesion force between the inorganic material 20 and the matrix 10 is increased when the inorganic material 20 is dispersed in the matrix 10, and the strength of the insulating film 3 can be improved.

In the case of containing a glass-based material as the inorganic material 20, the glass-based material is preferably at least one kind selected from a flaky glass-based material, a glass particle, and a glass fiber. Among these, the flaky glass-based material is oriented in a planar shape inside the insulating film 3 and exhibits an excellent insulating property and heat resistance. Therefore, it is particularly preferable to contain a flaky glass-based material as the glass-based material. In addition, the mica described above is particularly preferably used as the inorganic material 20 for the same reason as the flaky glass-based material.

A content of the inorganic material 20 with respect to all components in the insulating film 3 is preferably 3 vol% to 70 vol%, more preferably 10 vol% to 50 vol%, and still more preferably 20 vol% to 40 vol%. When the content of the inorganic material 20 is less than 3 vol%, the insulating property and the heat resistance may not be sufficiently obtained. On the other hand, when it is more than 70 vol%, a viscosity of a coating liquid to be subjected to dip coating is too high and a film forming property is poor.

The content of the inorganic material 20 in the insulating film 3 can be measured by, for example, a method same as the method for measuring the porosity. That is, a cross section of the composite member 1 in the direction parallel to the thickness direction of the insulating film 3 is taken using an electron microscope, any region is selected from the obtained photograph, and a portion that can be determined as an inorganic material in this region is colored. Thereafter, a total area of the colored portion (inorganic material) can be divided by an area of the selected region, to calculate the content (vol%) of the inorganic material 20. The larger the size of the region to be measured is, the smaller the error is. For example, similar to the measurement region of the porosity P3, a rectangular region having a length of a side in the film thickness direction being a length of 90% of the thickness of the insulating film 3 and a side of 300 µm in the direction orthogonal to the film thickness direction can be selected. The content of the inorganic material 20 in the insulating film 3 is preferably obtained by collecting regions having the above size from three different points in the insulating film 3 and calculating an average of the obtained contents, and more preferably obtained by calculating an average of contents obtained from five different points.

Note that, in addition to the matrix 10 and the inorganic material 20 described above, the insulating film 3 may contain other materials such as a flame retardant, a dispersant, and a pigment as long as the insulating property and the heat resistance are not influenced.

In addition, as to be described later, the insulating film 3 is formed by covering the surface of the substrate with a coating material (coating liquid), and it is preferable to contain a thixotropic agent in order to improve a coating performance of the coating liquid containing the material of the matrix 10 and the inorganic material 20.

### <Surface Layer>

The composite member 1 may include the surface layer 4 consisting of the material of the matrix 10 on at least a part of the surface of the insulating film 3. Unlike the insulating film 3, the surface layer 4 does not contain the inorganic material 20, and contains only the material of the matrix 10. Therefore, the surface layer 4 has high adhesion to the insulating film 3 and is harder and denser than the insulating film 3, and thus can have an effect of protecting the surface of the insulating film 3. Therefore, when the surface layer 4 is formed on at least a part of the surface of the insulating film 3, it is possible to suppress damage to the surface of the insulating film 3 and to alleviate an impact from a collision object. In addition, since the surface layer 4 is formed, it is possible to obtain an effect of preventing powder falling of the inorganic material 20 or the like.

### (Thickness of Surface Layer)

In the case where the composite member 1 includes the surface layer 4, when a thickness of the surface layer 4 is 10 µm or more, the effect of protecting the insulating film 3 by the surface layer 4 can be obtained. In addition, when the thickness of the surface layer 4 is 100 µm or less, the size of the composite member 1 is not influenced, and an increase in production cost can be suppressed.

### <Resin Layer>

The composite member 1 may include a resin layer (not shown) containing a resin different from the material of the matrix on at least a part of the surface. As a material of the resin layer, an insulating resin can be used, and examples thereof include an epoxy resin, a nylon resin, a styrene-butadiene rubber (SBR), and a silicone rubber. When the composite member 1 includes the resin layer, the insulating property and the heat resistance can be further improved. Note that, the resin layer may be formed on the surface of the insulating film 3 or may be formed on the surface layer 4.

### (Thickness of Resin Layer)

In the case where the composite member 1 includes the resin layer, when a thickness of the resin layer is 100 µm or more, the effect of improving the insulating property and the heat resistance can be sufficiently obtained. Therefore, the thickness of the resin layer is preferably 100 µm or more, more preferably 120 µm or more, and still more preferably 150 µm or more. In addition, when the thickness of the resin layer is 600 µm or less, the size of the composite member 1 is not influenced, and an increase in production cost can be suppressed. Therefore, the thickness of the resin layer is preferably 600 µm or less, more preferably 550 µm or less, and still more preferably 500 µm or less.

### <Substrate>

In the present embodiment, the substrate 2 is not particularly limited, and body portions of various products to which the composite member 1 according to the present embodiment is applied can be used as the substrate 2. For example, in the case of applying a bus bar to be described later as the composite member 1, a bus bar body having conductivity can be used as the substrate 2. Note that, although the bus bar body has conductivity and the substrate itself is energized, in the present embodiment, the substrate 2 covered with the insulating film 3 is not limited to a conductive one. For example, a substrate composed of a non-energized material can also be used.

### [Specific Application Example of Composite Member]

A product to which the composite member 1 is applied is not particularly limited, and the composite member 1 can be applied to, for example, a bus bar used for connecting a plurality of battery cells or battery modules in a power storage device. Hereinafter, a configuration of the composite member 1 will be described using a bus bar as an example.

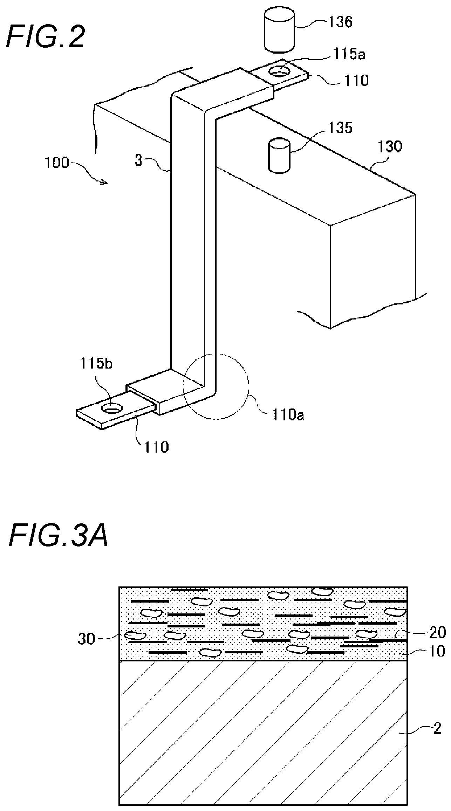

Fig. 2 is a perspective view showing a bus bar to which the composite member according to the present embodiment is applied. Note that, Fig. 2 shows a state immediately before a bus bar (composite member) 100 is attached to a battery cell 130. A bus bar body (substrate) 110 is, for example, a metal plate member having a Z shape as a whole, and is fixed by inserting an electrode 135 of the battery cell 130 into a connection hole 115a at one tip and covering the electrode 135 with a terminal cap 136. Adjacent battery cells (not shown) or external devices (not shown) are connected to a connection hole 115b at the other tip of the bus bar body 110. A region of the bus bar body 110 excluding the connection holes 115a and 115b is covered with the insulating film 3. In this manner, the bus bar 100 is formed.

Note that, although not shown, the bus bar body 110 may have various shapes depending on an installation location of the battery cell 130, such as an I-shape as a whole or an irregular shape having a curved portion.

When the bus bar body 110 has a shape having a bent portion 110a or a curved portion (not shown) such as a Z shape shown in the drawing, the following problems occur. For example, in the method of winding the ceramic tape around the body as in the bus bar disclosed in Patent Literature 1, it takes time and effort to perform the winding operation in order to prevent winding unevenness or a gap from occurring in the bent portion 110a or the curved portion. It is also assumed that a gap is generated between the ceramic tapes due to vibration or the like, or an adhesive between the ceramic tape and the body is peeled off.

In contrast, in the bus bar 100 configured as described above, the insulating property is not imparted by winding a tape around the bus bar body 110, but a surface of the bus bar body 110 is covered with the material (coating liquid) for forming the insulating film 3 to form the insulating film 3 in close contact with the bus bar body 110. Therefore, during the production of the bus bar 100, a winding operation is not required, there is no problems with winding unevenness, a gap, or peeling off, and it is possible to easily cope with even a complicated shape.

Note that, as a method of covering the surface of the bus bar body 110 with the coating liquid, "dip coating" in which the bus bar body 110 is immersed in a coating liquid or coating using a brush or a spray can be used. In the case of using dip coating, since the insulating film 3 is not formed in the connection hole 115a and the connection hole 115b, this region is masked and then the bus bar body 110 is immersed in the coating liquid. In this manner, the insulating film 3 covering at least a part of the surface of the bus bar body 110 can be formed.

In addition to the bus bar, the composite member according to the present embodiment can be applied to a connector, a protective component for a battery module, a case of an electronic component, a battery cell, a battery module, a battery pack, or a coil of a motor.

### [Method for Producing Composite Member]

The composite member according to the present embodiment can be produced, for example, by the following production method. Figs. 3A to 3D are schematic diagrams showing a method for producing a composite member according to the present embodiment in order of steps. Note that, in the following production method, a case where the compound having the siloxane bond contained in the matrix 10 is silicone will be described, and a case where the compound having the siloxane bond is silica sol (silica) can be similarly applied.

### (Application Step: First Time)

As shown in Fig. 3A, first, at least a part of the surface of the substrate 2 is coated with a first coating material (not shown). The first coating material (coating liquid) is, for example, obtained by adding the material of the matrix 10 containing silicone and the inorganic material 20 to an organic solvent.

### (First Coating Material Drying Step: First Time)

After the application step, the first coating material is dried at a temperature of 50°C, for example. In the first coating material drying step, the organic solvent is volatilized.

### (First Coating Material Curing Step: First Time)

Thereafter, the dried first coating material is heated at a temperature of, for example, 200°C to be cured. With the first coating material curing step, the silicone is dehydrated and condensed to form a first layer 5 having a three-dimensional network structure. In addition, a large number of pores 30 are formed in the first layer 5.

### (Immersion Step: First Time)

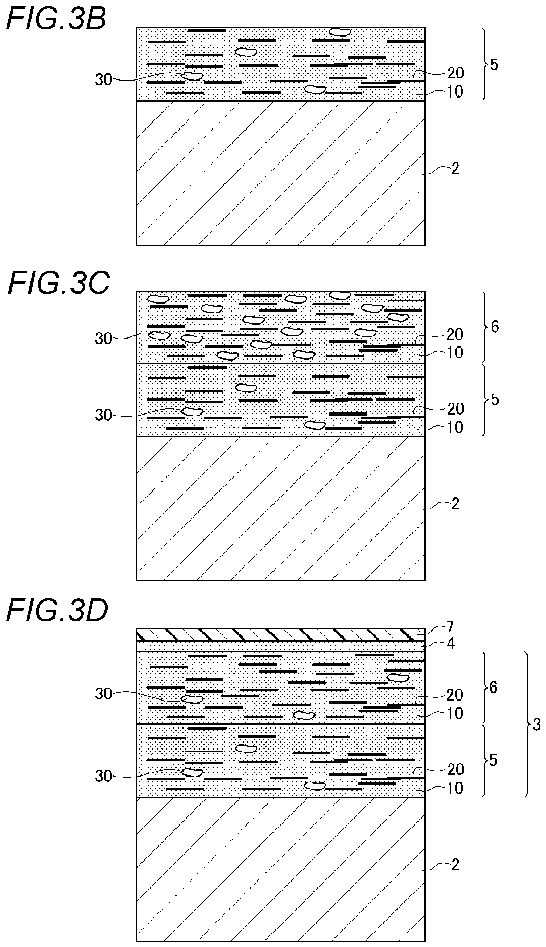

Thereafter, the substrate 2 on which the first layer 5 is formed is immersed in a second coating material. The second coating material does not contain the inorganic material 20 and is obtained by adding the material of the matrix 10 containing silicone to an organic solvent. Thereafter, the second coating material is dried at a temperature of, for example, 50°C and then heated at a temperature of, for example, 200°C to be cured. As shown in Fig. 3B, with the immersion step, some of the large number of pores 30 formed in the first layer 5 is filled with the second coating material, and a porosity of the first layer 5 is reduced. Note that, the second coating material may not contain the inorganic material 20 in the first coating material, or may be a material different from the material of the matrix 10.

### (Application Step: Second Time)

Thereafter, as shown in Fig. 3C, the first coating material (not shown) is stacked again on a surface of the first layer 5. The first coating material (coating liquid) is the same material as that used in the application step for the first time.

At this time, some of the pores 30 remaining in the first layer 5 is also filled with the first coating material.

### (First Coating Material Drying Step: Second Time)

After the application step, the first coating material is dried at a temperature of 50°C, for example. With the first coating material drying step for the second time, the organic solvent in the applied first coating material in the application step for the second time is volatilized.

### (First Coating Material Curing Step: Second Time)

Thereafter, the dried first coating material is heated at a temperature of, for example, 200°C to be cured. With the first coating material curing step for the second time, the silicone is dehydrated and condensed to form a second layer 6 having a three-dimensional network structure. In addition, a large number of pores 30 are formed in the second layer 6.

### (Immersion Step: Second Time)

Thereafter, as shown in Fig. 3D, the substrate 2 having the second layer 6 formed thereon is immersed in the second coating material. The second coating material is the same material as that used in the immersion step for the first time. Thereafter, the second coating material is dried at a temperature of, for example, 50°C and then heated at a temperature of, for example, 200°C to be cured. With the immersion step, some of the large number of pores 30 formed in the second layer 6 are filled with the second coating material, and a porosity of the second layer 6 is reduced. Note that, the second coating material in the immersion step for the second time may not contain the inorganic material 20 in the first coating material, or may be a material different from the material of the matrix 10.

In addition, an immersion time in the immersion step for the second time may be the same as an immersion time for the first time, or may be longer than the immersion time for the first time. The second coating material penetrates the second layer 6 from a surface of the second layer 6, but when the second coating material remains on the surface of the second layer 6 due to the immersion for a long time, the second coating material is cured as it is, and the surface layer 4 is formed on the surface of the second layer 6. The surface layer 4 is formed from the second coating material remaining on the surface, and thus has a dense structure not containing the inorganic material 20.

### (Resin Layer Forming Step)

Thereafter, on the surface layer 4, for example, an epoxy resin coating material is applied by electrostatic powder coating or fluid immersion coating to form a resin layer 7. In the case of forming the resin layer 7, a part of the material constituting the resin layer 7 may penetrate the layers below the resin layer 7.

According to the above production method, the substrate 2 is covered with the first coating material to be dried and cured to form the first layer, and by immersion in the second coating material, some of the pores 30 in the first layer are filled with the second coating material. Thereafter, the substrate 2 is further covered with the first coating material to be dried and cured to form the second layer, and by immersion in the second coating material, not only the pores in the second layer but also the pores remaining in the first layer are filled with the second coating material. For example, by increasing the immersion time in the immersion step for the second time, the pores remaining in the first layer can be further filled with the second coating material. Therefore, in the case where the insulating film 3 including a plurality of layers is formed by repeating these steps while adjusting the immersion time, the porosity P1 of the region R1 near the substrate 2 can be made smaller than the porosity P2 of the region R2 on the surface of the insulating film 3. As a result, the ratio (P1/P2) of the porosity P1 to the porosity P2 can be 0.9 or less.

As described above, the second coating material used in the immersion step may be the same material as the first coating material used in the immersion step for the first time, may not contain the inorganic material 20 in the first coating material, or may be a material different from the material of the matrix 10. However, from the viewpoint of affinity, it is preferable to use a material same as the first coating material or a material not containing the inorganic material 20 in the first coating material. In addition, since the material of the matrix 10 is silicone, when the second coating material contains silicone, the amount of silicone is increased, the adhesion between the insulating film 3 and the substrate is further increased, and a force for maintaining the inorganic material 20 is also increased. Further, when the amount of silicone is increased, the amount of SiO₂ also increases, and the insulating film 3 is more effectively maintained even in the case of receiving a flame.

Note that, in the above production method, the series of steps from the application step to the immersion step is repeated twice, but may be repeated a plurality of times until a desired thickness is obtained. Even in the case where the series of steps is repeated a plurality of times, since the immersion step is included in each of the repeated steps, it is possible to form an insulating film having a small porosity and a high strength.

In addition, in the above production method, the first coating material (coating liquid) is obtained by adding the material of the matrix 10 containing silicone and the inorganic material 20 to the organic solvent, and the second coating material (coating liquid) does not contain the inorganic material 20 and is obtained by adding the material of the matrix 10 containing silicone to the organic solvent, but the composite member according to the present invention can be obtained without performing the immersion step depending on the kinds of the first coating material and the second coating material, for example, in the case of silica sol (silica).

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-170682) filed on September 29, 2023, and the contents thereof are incorporated herein by reference.

### REFERENCE SIGNS LIST

1 composite member
2 substrate
3 insulating film
4 surface layer
7 resin layer
10 matrix
20 inorganic material
30 pore
100 bus bar
110 bus bar body
115a, 115b connection hole
130 battery cell
135 electrode
136 terminal cap

## Claims

1. A composite member comprising:
a substrate; and
an insulating film covering at least a part of a surface of the substrate, wherein
the insulating film has a thickness of 150 µm or more,
the insulating film contains a matrix containing a compound having a siloxane bond and an inorganic material dispersed in the matrix, and
in a case where a cross section of the composite member parallel to a thickness direction of the insulating film is observed, a ratio (P1/P2) of a porosity P1 in a rectangular region R1 to a porosity P2 in a rectangular region R2 is 0.3 or more and 3.0 or less, the rectangular region R1 having a side of 75 µm in the thickness direction and a side of 300 µm in a direction orthogonal to the thickness direction in a range from an interface between the insulating film and the substrate to 100 µm in the thickness direction, and the rectangular region R2 having a side of 75 µm in the thickness direction and a side of 300 µm in the direction orthogonal to the thickness direction in a range from a surface of the insulating film to 100 µm in the thickness direction.

2. The composite member according to claim 1, wherein
in the case where the cross section of the composite member parallel to the thickness direction of the insulating film is observed, a porosity P3 in a rectangular region R3 is 10% or less, the rectangular region R3 having a side in a direction parallel to the thickness direction being a length of 90% of the thickness of the insulating film and a side of 300 µm in the direction orthogonal to the thickness direction.

3. The composite member according to claim 1, wherein both the porosity P1 and the porosity P2 are 10% or less.

4. The composite member according to claim 1, wherein a surface layer consisting of a material of the matrix is provided on at least a part of the surface of the insulating film.

5. The composite member according to claim 4, wherein the surface layer has a thickness of 10 µm or more and 100 µm or less.

6. The composite member according to any one of claims 1 to 5, wherein a resin layer containing a resin different from the material of the matrix is provided on at least a part of the surface of the insulating film.

7. The composite member according to claim 6, wherein the resin layer has a thickness of 100 µm or more and 600 µm or less.

8. The composite member according to any one of claims 1 to 5, wherein the compound having the siloxane bond is at least one of silicone and silica sol.

9. The composite member according to any one of claims 1 to 5, wherein the inorganic material includes at least one kind selected from silica, alumina, mullite, and zirconia.

10. The composite member according to any one of claims 1 to 5, wherein the inorganic material includes at least one kind selected from a glass-based material, mica, kaolin, talc, clay, pyrophyllite, montmorillonite, bentonite, wollastonite, xonotlite, zeolite, diatomaceous earth, and halloysite.

11. The composite member according to any one of claims 1 to 5, wherein the inorganic material includes at least one kind selected from a flaky inorganic material, a fibrous inorganic material, and a particulate inorganic material.

12. The composite member according to any one of claims 1 to 5, wherein the inorganic material includes at least one of a flaky glass-based material and mica.

13. The composite member according to any one of claims 1 to 5, wherein the composite member is applied to a bus bar that connects a plurality of battery cells or battery modules.

14. The composite member according to any one of claims 1 to 5, wherein the composite member is applied to a connector, a protective component for a battery module, a case of an electronic component, a battery cell, a battery module, a battery pack, or a coil of a motor.
